# EUROPÄISCHE PATENTSCHRIFT

(11) **EP 3 490 849 B1**
(45) Veröffentlichungstag und Bekanntmachung des Hinweises auf die Patenterteilung: **07.07.2021**
(21) Anmeldenummer: 17742432.2
(22) Anmeldetag: 21.07.2017
(51) Int. Cl.: B60R 21/264

(54) **GASGENERATOR MIT PYROTECHNISCHEM TREIBSATZ UND VERFAHREN ZUR HERSTELLUNG DES TREIBSATZES**
PYROTECHNIC GAS GENERATOR AND METHOD OF MANUFACTURE OF SUCH A GAS GENERATOR
GÉNÉRATEUR PYROTECHNIQUE DE GAZ ET PROCÉDÉ DE FABRICATION D'UN TEL GÉNÉRATEUR DE GAZ

(30) Priorität: 26.07.2016 DE 102016113732
(43) Veröffentlichungstag der Anmeldung: 05.06.2019
(73) Patentinhaber: ZF Airbag Germany GmbH, 84544 Aschau a. Inn (DE)
(72) Erfinder: FRIEDRICH, Jörg, 84564 Oberbergkirchen (DE); JAHNEL, Siegfried, 84513 Töging (DE)
(74) Vertreter: ZF Patentabteilung - DIPS
(86) Internationale Anmeldenummer: PCT/EP2017/068461
(87) Internationale Veröffentlichungsnummer: WO 2018/019713

(56) Entgegenhaltungen:
- EP-A1- 0 794 164
- WO-A1-2012/055460
- WO-A2-2006/022753
- US-A1- 2004 050 283
- US-A1- 2010 109 304
- US-A1- 2010 186 615
- SHIMPI S A ET AL: "The closed bomb test for the assessment of solid propellant grains utilized in guns", COMBUSTION AND FLAME, ELSEVIER SCIENCE PUBLISHING CO., INC., NEW YORK, NY.; US, AMSTERDAM, NL, Bd. 25, 1. August 1975 (1975-08-01), Seiten 229-240, XP025453423, ISSN: 0010-2180, DOI: 10.1016/0010-2180(75)90089-9 [gefunden am 1975-08-01]
- Leonard H Caveny ET AL: "AU-AO17 747 IGNITION TRANSIENTS AND PRESSURIZATION IN CLOSED CHAMBERS", , 1. November 1975 (1975-11-01), XP055415478, Gefunden im Internet: URL:http://www.dtic.mil/get-tr-doc/pdf?AD= ADA017747 [gefunden am 2017-10-16]

## Beschreibung

Die Erfindung betrifft einen Gasgenerator mit einem pyrotechnischen Treibsatz, insbesondere zur Verwendung in einer Sicherheitseinrichtung für Fahrzeuge.

Sicherheitseinrichtungen in Fahrzeugen müssen im Notfall innerhalb von wenigen Millisekunden aktiviert werden. Dies gilt für aufblasbare Rückhalteeinrichtungen wie Airbags ebenso wie für Gurtstraffer, Kniefänger und dergleichen. Pyrotechnische Gasgeneratoren eignen sich zur Aktivierung von solchen Sicherheitseinrichtungen, da sie die benötigte Gasmenge ausreichend rasch produzieren.

Die DE 20 2006 008 857 U1 beschreibt einen pyrotechnischen Gasgenerator, bei dem ein Treibsatz in einer losen Schüttung von Treibstofftabletten vorliegt, wobei die Schüttung aus einer ersten, anzünderseitig angeordneten Teilschüttung und einer zweiten Teilschüttung besteht, die direkt an die erste Teilschüttung angrenzt. Die Treibstofftabletten der ersten und der zweiten Teilschüttung weisen eine unterschiedliche Geometrie auf, sodass eine Abbrandgeschwindigkeit der ersten Teilschüttung höher ist als die Abbrandgeschwindigkeit der zweiten Teilschüttung. Dies ermöglicht ein kontrolliertes, zweistufiges Zünden der Teilschüttungen ohne Beschichtung der Teilschüttungen und auch ohne eine Trennung der beiden Teilschüttungen durch eine Trennwand. Die beiden Teilschüttungen sollen so kompakt geschüttet und dicht gelagert sein, dass trotz Vibrationen kein Entmischen der Teilschüttungen erfolgt, und somit über die Lebensdauer des Kraftfahrzeugs die volle Funktionsfähigkeit des Gasgenerators sichergestellt ist.

Aus der WO 2012/055460 A1 ist ein Gasgenerator mit einem Treibsatz aus im Wesentlichen zylindrischen Treibstofftabletten bekannt, die durch trockenes Pressen einer pulverförmigen Treibstoffzusammensetzung erhältlich sind und einen Durchmesser von höchstens 2 mm sowie eine relative Schüttdichte von mindestens 0,5 aufweisen. Die relative Schüttdichte wird im Wesentlichen durch die Geometrie des Treibstoffkörpers bestimmt. In Beschussversuchen, also Funktionsüberprüfungsversuchen des Gasgenerators, zeigen diese kleindimensionierten Treibstofftabletten eine sehr enge Streuung, da die Korngrößenverteilung bzw. Treibstofftablettengeometrie im Treibsatz in engen Grenzen eingestellt und reproduziert werden kann. Die ballistischen Eigenschaften der Treibsätze sollen auch über eine Variation der Korngrößenverteilung bzw. Treibstofftablettengeometrie durch Verwendung von Tabletten verschiedener Größe variabel und reproduzierbar eingestellt werden können.

Die EP 0 794 164 A1 zeigt eine Aufblasvorrichtung für die Verwendung in Fahrzeugen mit einer Treibmittelzusammensetzung, die eine Brennstoff- und eine Oxidationsmittel-Komponente aufweist. Die Oxidationsmittel-Komponente enthält Ammoniumnitrat. Als Brennstoff-Komponente werden beispielsweise RDX, HMX, PETN, TAGN oder Tetrazole eingesetzt. Die Brennstoff-Komponente sowie die Oxidationsmittel-Komponente liegen in einer Form von Körnern bzw. Granulatkörnern vor. Diese können insbesondere in einem polymeren Bindemittel aufgenommen sein, das eine poröse Struktur herstellt. Durch die poröse Struktur kann die Oxidationsmittel-Komponente Kristallphasenänderungen durchlaufen, ohne dass die Durchmischung und das Abbrandverhalten der Treibmittelzusammensetzung verändert wird.

Die US 2010/0186615 A1 zeigt einen Gasgenerator mit einer Verbrennungskammer, in der erste Treibmittelformteile und zweite Treibmittelformteile aufgenommen sind. Die ersten Treibmittelformteile weisen eine Brennstoffkomponente auf, die ein Guanidin- und/oder ein Tetrazolderivat umfasst, sowie ein Oxidationsmittel, das ein Metallnitrat und/oder ein Perchlorat umfasst. Die zweiten Treibmittelformteile umfassen als Hauptbestandteil Nitrozellulose. Die Abbrandgeschwindigkeit der Mischung aus ersten und zweiten Treibmittelformteilen sowie die Menge an Kohlenstoffmonoxid, die beim Abbrand der Treibmittelformteile entsteht, wird über das Volumenverhältnis, das Gewichtsverhältnis und/oder das Verhältnis der Abbrandgeschwindigkeiten der verschiedenen Treibmittelformteile zueinander eingestellt.

Bei der kommerziellen Fertigung eines Gasgenerators wird der pyrotechnische Treibsatz über einen Fertigungsauftrag mit exakten Vorgaben hinsichtlich einer Mahldauer eines Treibstoffpulvers und der Geometrie der Treibstofftabletten hergestellt. Mit zunehmender Zahl an Gasgeneratorvarianten und zusätzlichen Leistungsabstufungen innerhalb einer solchen Variante steigt auch die Zahl der individuell zu fertigenden Treibsätze. Nach der Herstellung der Treibsätze werden Stichproben von jedem Los genommen und die ballistischen Eigenschaften der Lose in einer sogenannten Normbrennkammer und/oder im Gasgenerator direkt geprüft. Erst danach erfolgt eine Einteilung, für welche Gasgeneratorvariante das hergestellte Treibsatzlos tatsächlich geeignet ist oder ob das Los weiter verschnitten bzw. quergemischt werden muss. Diese Vorgehensweise erfordert eine hohe Anzahl an Treibsatzvarianten, die separat gepresst und bevorratet werden müssen. Außerdem ergibt sich aus der steigenden Anzahl der Treibsatzvarianten ein hoher Prüfungsaufwand für diese Anzahl der Treibsatzvarianten sowie ein hoher Aufwand bei einer weiteren Nachbearbeitung von Treibsatzlosen, die nicht der ballistischen Spezifikation entsprechen.

Der Erfindung liegt daher die Aufgabe zugrunde, einen pyrotechnischen Treibsatz bereitzustellen, der ein vorbestimmtes ballistisches Profil aufweist und kostengünstig hergestellt werden kann und einen Gasgenerator mit einem derartigen pyrotechnischen Treibsatz bereitzustellen.

Zur Lösung dieser Aufgabe bezüglich des Gasgenerators wird erfindungsgemäß ein Gasgenerator gemäß Anspruch 1, und bezüglich des pyrotechnischen Treibsatzes ein Verfahren zur Herstellung eines pyrotechnischen Treibsatzes gemäß Anspruch 9 zur Verwendung in dem Gasgenerator bereitgestellt.

Vorteilhafte Ausführungsformen der Erfindung sind in den Unteransprüchen angegeben, die wahlweise miteinander kombiniert werden können.

Der erfindungsgemäße Gasgenerator umfasst einen pyrotechnischen Treibsatz, wobei der Treibsatz aus einem ersten und wenigstens einem zweiten Masterbatch gebildet ist, die gemischt in einer Schüttung vorliegen. Jeder Masterbatch weist eine Vielzahl von Treibstoff-Formkörpern mit definierter Geometrie und einer relativen Quickness auf. Die relative Quickness RQ₂ des zweiten Masterbatches ist kleiner als die relative Quickness RQ₁ des ersten Masterbatches, wobei RQ₂ = RQ₁ · fq und fq ≤ 0,9 ist.

Die jeweilige relative Quickness RQ wird durch Prüfung einer Probe von 10 g des jeweiligen Treibsatzes oder Masterbatches in einer Normbrennkammer bestimmt, wobei die Normbrennkammer ein verschließbares Gefäß aus Stahl mit einem Volumen von 100 cm³ ist. Zur Prüfung wird die Probe bei Raumtemperatur innerhalb der Normbrennkammer mittels eines pyrotechnischen Anzünders angezündet und der Druckanstieg während des Treibstoffabbrands mittels eines Piezosensors mit einer Abtastrate von 20 kHz ermittelt wird. Aus den Messdaten ergibt sich eine Druck/Zeit-Kurve, die zur Bestimmung der relativen Quickness RQ ausgewertet wird. Die Auswertung erfolgt mittels der ersten Ableitung dp/dt der Druck-Zeit-Kurve, wobei die Funktionswerte an den Stützstellen bei 0,2, 0,3, 0,4, 0,5, 0,6, 0,7 und 0,8 p/pₘₐₓ der ersten Ableitung ermittelt werden. Der Mittelwert aus den an den Stützstellen ermittelten Funktionswerten entspricht der jeweiligen relativen Quickness RQ.

Je nach Treibstofftyp und Zusammensetzung werden somit nur noch wenige Treibstoff-Masterbatches benötigt, die mit einer deutlichen Abweichung der ballistischen Eigenschaften der Treibstoff-Formkörper in den einzelnen Masterbatches hergestellt werden. Die Ballistik der einzelnen Masterbatches wird anhand ihrer jeweiligen relativen Quickness RQ bestimmt. Aus diesen ballistisch unterschiedlichen Masterbatches können über individuelle Mischungsverhältnisse alle Treibsätze mit gewünschten, vordefinierten ballistischen Eigenschaften bedarfsgerecht hergestellt werden. Das Mischungsverhältnis wird anhand der Ballistik der einzelnen Masterbatches und der gewünschten Ballistik des Treibsatzes für den Einsatz im Gasgenerator eingestellt.

Die Menge und der Zeitpunkt des Abmischens der Masterbatches können an den jeweiligen Fertigungsaufträgen für den Gasgenerator ausgerichtet werden. Vorteilhaft ist außerdem das Mischen der Masterbatches vor Ort an der Gasgenerator-Fertigungslinie. Der Treibsatz mit den gewünschten ballistischen Eigenschaften kann dann "Just in Time" bereitgestellt werden. Damit kann der logistische Aufwand für einen Wechsel von Treibstoffen und Leistungsvarianten eines Gasgenerators weiter reduziert werden.

Die Treibstoff-Formkörper in dem ersten und dem zweiten Masterbatch sowie wahlweise in jedem weiteren Masterbatch weisen die gleiche Zusammensetzung auf, und zwar sowohl hinsichtlich der im Masterbatch enthaltenen Treibstoffkomponenten als auch bevorzugt hinsichtlich der Anteile der Komponenten. Damit kann die Herstellung des pyrotechnischen Treibsatzes weiter vereinfacht werden. Außerdem ist dann sichergestellt, dass die einzelnen Masterbatches miteinander kompatibel sind.

Die Geometrie der Treibstoff-Formkörper im ersten Masterbatch ist gleich, jedoch verschieden von der Geometrie der Treibstoff-Formkörper im zweiten Masterbatch. Über die unterschiedliche Geometrie der Treibstoff-Formkörper lassen sich die ballistischen Eigenschaften der jeweiligen Masterbatches besonders einfach beeinflussen und einstellen.

Die Treibstoff-Formkörper liegen vorzugsweise in Form von Treibstofftabletten vor, die durch Extrudieren, trockenes Pressen oder Nasspressen hergestellt werden können. Die Treibstoff-Formkörper können aber auch jede andere vordefinierte Form aufweisen. Weiter ist möglich, die Formkörper mit einem oder mehreren Durchgangslöchern bereitzustellen. Derartige Ein- und Mehrlochkörper können beispielsweise durch Strangpressen hergestellt werden.

Bevorzugt liegen die Treibstoff-Formkörper als Treibstofftabletten vor. Besonders bevorzugt weisen die Treibstofftabletten im ersten und zweiten sowie wahlweise jedem weiteren Masterbatch den gleichen Durchmesser aber eine unterschiedliche Höhe auf. Besonders bevorzugt liegt der Durchmesser der Treibstofftabletten in jedem der Masterbatches in einem Bereich von 2 bis 10 mm, vorzugsweise von 2 bis 8 mm, weiterhin vorzugsweise von 3 bis 8 mm, weiterhin vorzugsweise von 3 bis 6 mm und besonders bevorzugt von 4 bis 8 mm.

Die Höhe der Treibstofftabletten in den einzelnen Masterbatches kann in einem Bereich von 1 bis 6 mm liegen, insbesondere von 1 bis 5 mm liegen, bevorzugt von 1 bis 4 mm, besonders bevorzugt von 1 bis 3 mm.

Gemäß einer bevorzugten Ausführungsform ist der pyrotechnische Treibsatz aus einem ersten und einem zweiten Masterbatch gebildet, wobei fq in einem Bereich von 0,4 bis 0,9 liegt, vorzugsweise von 0,4 bis 0,8.

Gemäß einer weiteren Ausführungsform kann der pyrotechnische Treibsatz aus mehr als zwei Masterbatches gebildet sein. Allgemein gilt in diesem Fall, dass die relative Quickness RQₓ eines einzelnen Masterbatches größer ist als die relative Quickness RQₓ₊₁ des folgenden Masterbatches, wobei RQₓ ≥ RQₓ₊₁ x 0,9 ist. Wird der pyrotechnische Treibsatz beispielsweise aus drei Masterbatches gebildet, bezeichnet RQ₁ die relative Quickness des ersten Masterbatches, RQ₂ die relative Quickness des zweiten Masterbatches und RQ₃ die relative Quickness des dritten Masterbatches, wobei RQ₁ > RQ₂ > RQ₃ und RQ₁ ≥ RQ₂ x 0,9 sowie RQ₂ ≥ RQ₃ x 0,9 ist. Die Verwendung von mehr als drei Masterbatches ist zwar möglich, aber weniger bevorzugt, da dann der Aufwand für die Bereitstellung und Prüfung der Masterbatches zunimmt.

Bevorzugt sind die ballistischen Eigenschaften des ersten und zweiten Masterbatches sowie wahlweise der weiteren Masterbatches so eingestellt, dass die durch Aktivierung eines Gasgenerators in einer geschlossenen Testkanne gemessene Zeit bis zum Erreichen des maximalen Kannendrucks tpKₘₐₓ(1) des ersten Masterbatches um einen Faktor 1,5 bis 3,2 kürzer ist als die Zeit tpKₘₐₓ(2) des zweiten Masterbatches und wahlweise der weiteren Masterbatches, das heißt, tpKₘₐₓ(1) x ft = tpKₘₐₓ(2) mit ft = 1,5 bis 3,2. Vorzugsweise liegt ft in einem Bereich von 1,5 bis 2,8, besonders bevorzugt von 1,6 bis 2,0. Anders ausgedrückt weist der erste Masterbatch eine in einem Kannenversuch gemessene Zeit bis zum Erreichen des maximalen Kannendrucks tpKₘₐₓ(1) und der zweite Masterbatch eine unter gleichen Versuchsbedingungen im Kannenversuch gemessene Zeit bis zum Erreichen des maximalen Kannendrucks tpKₘₐₓ(2) auf, wobei tpKₘₐₓ(1) · ft = tpKₘₐₓ(2) ist, wobei ft in einem Bereich von 1,5 bis 3,2 liegt, vorzugsweise in einem Bereich von 1,5 bis 2,8 und besonders bevorzugt in einem Bereich von 1,6 bis 2,0.

Gegenstand der Erfindung ist ferner ein Verfahren zur Herstellung des pyrotechnischen Treibsatzes zur Verwendung in einem Gasgenerator, welches die folgenden Schritte umfasst:
Bereitstellen eines ersten Masterbatches aus einer Vielzahl von Treibstoff-Formkörpern mit vordefinierter Geometrie und einer ersten relativen Quickness RQ₁;
Bereitstellen eines zweiten Masterbatches aus einer Vielzahl von Treibstoff-Formkörpern mit vordefinierter Geometrie und einer zweiten relativen Quickness RQ₂, wobei die relative Quickness RQ₂ des zweiten Masterbatches kleiner ist als die relative Quickness RQ₁ des ersten Masterbatches, wobei RQ₂ = RQ₁ · fq und fq ≤ 0,9 ist; und
Mischen einer vorbestimmten Menge des ersten Masterbatches mit einer vorbestimmten Menge des zweiten Masterbatches unter Bildung des pyrotechnischen Treibsatzes in Form einer Schüttung, in der die Treibstoff-Formkörper gemischt vorliegen.

Die jeweilige relative Quickness RQ wird durch Prüfung einer Probe von 10 g des jeweiligen Treibsatzes oder Masterbatches in einer Normbrennkammer bestimmt, wobei die Normbrennkammer ein verschließbares Gefäß aus Stahl mit einem Volumen von 100 cm³ ist. Zur Prüfung wird die Probe bei Raumtemperatur innerhalb der Normbrennkammer mittels eines pyrotechnischen Anzünders angezündet und der Druckanstieg während des Treibstoffabbrands mittels eines Piezosensors mit einer Abtastrate von 20 kHz ermittelt wird. Aus den Messdaten ergibt sich eine Druck/Zeit-Kurve, die zur Bestimmung der relativen Quickness RQ ausgewertet wird. Die Auswertung erfolgt mittels der ersten Ableitung dp/dt der Druck-Zeit-Kurve, wobei die Funktionswerte an den Stützstellen bei 0,2, 0,3, 0,4, 0,5, 0,6, 0,7 und 0,8 p/pₘₐₓ der ersten Ableitung ermittelt werden. Der Mittelwert aus den an den Stützstellen ermittelten Funktionswerten entspricht der jeweiligen relativen Quickness RQ.

Die Treibstoff-Formkörper weisen in dem ersten und zweiten Masterbatch sowie wahlweise in jedem weiteren Masterbatch die gleiche Zusammensetzung hinsichtlich der Treibstoff-Komponenten auf. Die Geometrie der Treibstoff-Formkörper ist innerhalb der einzelnen Masterbatches gleich, aber verschieden von der Geometrie der Treibstoff-Formkörper in den jeweils anderen Masterbatches.

Das Mischen der Masterbatches ergibt eine homogene Mischung der Treibstoff-Formkörper, sodass Zufallsproben des gemischten Treibsatzes im Wesentlichen gleiche ballistische Eigenschaften aufweisen.

Gemäß einer weiteren Ausführungsform umfasst das Verfahren ferner einen Schritt, bei dem wenigstens ein weiterer Masterbatch aus einer Vielzahl von Treibstoff-Formkörpern mit vordefinierter Geometrie und jeweils einer relativen Quickness RQ₃ bereitgestellt wird, wobei die Geometrie der Treibstoff-Formkörper im weiteren Masterbatch verschieden von der Geometrie der Treibstoff-Formkörper im ersten und zweiten Masterbatch ist, und wobei die relative Quickness RQ₃ des weiteren Masterbatches kleiner ist als die relative Quickness RQ₂ des zweiten Masterbatches, wobei RQ₃ = RQ₂ · fq und fq ≤ 0,9 ist, vorzugsweise fq = 0,4 bis 0,9 ist.. Gemäß einer bevorzugten Ausführungsform wird zunächst eine gewünschte ballistische Eigenschaft des pyrotechnischen Treibsatzes festgelegt, und die vorbestimmten Mengen des ersten Masterbatches und des zweiten Masterbatches sowie wahlweise der weiteren Masterbatcheds werden so eingestellt, dass die Schüttung der Treibstoff-Formkörper aus gemischten Masterbatches die gewünschte ballistische Eigenschaft aufweist.

Als gewünschte ballistische Eigenschaft des pyrotechnischen Treibsatzes kann die relative Quickness RQ, der maximale Brennkammerdruck eines Gasgenerators pBKGGₘₐₓ, die Zeit bis zum Erreichen des maximalen Brennkammerdrucks des Gasgenerators tpBKGGₘₐₓ, der maximale Kammerdruck in einer Normbrennkammer pBKₘₐₓ, die Zeit bis zum Erreichen des maximalen Kammerdrucks in der Normbrennkammer tpBKₘₐₓ, der maximale Kannendruck pKₘₐₓ, die Zeit bis zum Erreichen des maximalen Kannendrucks im Kannenversuch tpKₘₐₓ, die Abbrandgeschwindigkeit und/oder die Abbranddauer des Treibsatzes festgelegt werden. Die Bestimmung der ballistischen Parameter des pyrotechnischen Treibstoffs und der einzelnen Masterbatches erfolgt dabei unter gleichen Versuchsbedingungen, sodass ein unmittelbarer Vergleich der Parameter möglich ist.

Die Erfinder haben insbesondere festgestellt, dass das ballistische Profil des pyrotechnischen Treibsatzes stärker durch den ersten Masterbatch mit hoher relativer Quickness beeinflusst wird. Von diesem Masterbatch muss also eine geringere Menge eingesetzt werden. Der Masterbatch mit kleinerer relativer Quickness weist aber typischerweise Formkörper mit größeren Abmessungen auf, die leichter und günstiger zu fertigen sind. Dadurch können die Herstellungskosten des pyrotechnischen Treibsatzes reduziert werden.

Bevorzugt erfolgt das Mischen der Masterbatches unter Bildung des pyrotechnischen Treibsatzes unmittelbar an der Fertigungslinie des Gasgenerators. Damit kann flexibel auf die Herstellung verschiedener Gasgeneratorvarianten reagiert werden, ohne dass neue Treibstoffvarianten bereitgestellt werden müssen. Das Abmischen des pyrotechnischen Treibsatzes "Just in Time" an der Fertigungslinie trägt außerdem zur Reduzierung der Kosten für die Lagerhaltung bei.

Die vorliegende Erfindung ermöglicht die bedarfsgereichte Bereitstellung eines pyrotechnischen Treibstoffs mit definierten ballistischen Eigenschaften in gewünschter Menge und zum gewünschten Zeitpunkt während der Fertigung eines Gasgenerators. Mit der Erfindung kann außerdem die Zahl der Treibstoffvarianten reduziert werden, die gepresst und auf Lager vorgehalten werden müssen. Außerdem ist dadurch auch der Prüfungsaufwand für die einzelnen Treibstofflose reduziert. Die Bereitstellung von Masterbatches mit Formkörpern von definierter Geometrie und ballistischem Profil ermöglicht ferner die individuelle Anpassung der Treibstoffballistik an die jeweilige Gasgeneratorvariante.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein Diagramm mit einer Darstellung der relativen Quickness von Treibsätzen aus Masterbatches mit verschiedenen Mischungsverhältnissen;
- Figur 2 ein Diagramm mit einer Darstellung der ersten Ableitung einer in der Normbrennkammer erhaltenen Druck/Zeit-Kurve für verschiedene Masterbatches; und
- Figur 3 ein Diagramm mit einer Darstellung der Kannendruckkurve von Treibsätzen aus gemischten Masterbatches mit verschiedener Treibstoffgeometrie.

### Herstellung der Masterbatches

Ein Treibstoffpulver aus 45 Gew.-% Guanidinnitrat, 50 % basischem Kupfernitrat und 5 % Guarmehl wurde vermahlen und trocken zu zylindrischen Treibstofftabletten mit vordefinierten Abmessungen gepresst. Statt der 5 % Guarmehl kann generell ein 5% Anteil eines Additivs verwendet werden.

Die so erhaltenen Treibstofftabletten wurden als Masterbatches bereitgestellt, in denen jeweils nur Treibstofftabletten einer definierten Geometrie vorlagen. In allen Masterbatches betrug der Durchmesser der zylindrischen Treibstofftabletten 6 mm. Die Höhe der Treibstofftabletten im ersten Masterbatch betrug 1,4 mm, im zweiten Masterbatch 2,0 mm, welches auch ein Referenzlos darstellt, im dritten Masterbatch 2,4 mm und im vierten Masterbatch 3,0 mm.

Auf die gleiche Weise wurde ein weiterer Masterbatch aus Treibstofftabletten mit einem Durchmesser von 4,0 mm und einer Höhe von 1,3 mm hergestellt.

### Mischungsversuche und ballistische Tests

Die so hergestellten Masterbatches wurden in verschiedenen Anteilen miteinander gemischt, so dass ein Treibsatz erhalten wurde, in dem die Treibstofftabletten der jeweiligen Masterbatches in einer Schüttung homogen gemischt vorlagen.

Die ballistischen Eigenschaften der Masterbatches und der durch Mischen der Masterbatches hergestellten Treibsätze wurden durch Beschussversuche in der Normbrennkammer und in einem Standardgasgenerator geprüft. Für die Treibsätze und die jeweils zur Herstellung der Treibsätze verwendeten Masterbatches wurden die gleichen Versuchsbedingungen verwendet, d. h., bei der Prüfung der Treibsätze (Mischungen) bzw. Masterbatches wurden die gleichen Versuchsbedingungen angewendet. Es wurden also die Masterbatches und Treibsätze mit gleicher Beladung, Treibstoff-Zusammensetzung, Gasgenerator-Aufbau und Volumen der jeweiligen Testgefäße geprüft. Somit können die Änderungen der ballistischen Parameter allein auf die Geometrie der Treibstoff-Formkörper zurückgeführt werden.

Als "Normbrennkammer" wird ein abgeschlossenes Gefäß mit einem definierten Volumen (100 ccm) bezeichnet, in dem der Treibstoff als solcher abgebrannt wird. Aus diesem Test ergeben sich Druck/Zeit-Kurven, die den getesteten Treibstoff ballistisch charakterisieren. Die Normbrennkammer ist ein allgemein anerkanntes Mittel zur Prüfung der ballistischen Eigenschaften von pyrotechnischen Treibstoffen und Treibladungspulvern. Die relative Änderung der ballistischen Eigenschaften der getesteten Masterbatches und Treibsätze sind bei gleicher Normbrennkammer (Volumen), Beladung und gleicher Treibstoff-Zusammensetzung nur abhängig von der Geometrie der getesteten Treibstoff-Formkörper. Die Normbrennkammer gestattet somit einen Vergleich der unterschiedlichen Treibstoff-Geometrien, ohne weitere Anpassung der verwendeten Testapparatur.

Beim sogenannten "Kannenversuch" wird ein Standardgasgenerator mit einem Treibsatz beladen und in einer geschlossenen Testkanne mit definiertem Volumen (60 Liter) aktiviert. Ähnlich wie beim Versuch in der Normbrennkammer wird eine Druck/Zeit-Kurve erhalten, die ebenfalls zur ballistischen Charakterisierung des jeweiligen Treibsatzes herangezogen werden kann. Unter Verwendung des gleichen Gasgenerators bei gleicher Beladung und gleicher Treibstoff-Zusammensetzung sind die relativen Änderungen zwischen den zu vergleichenden Treibsätzen und Masterbatches nur abhängig von der Geometrie der Treibstoff-Formkörper.

Die relative Quickness wurde durch eine Prüfung des jeweiligen Treibsatzes oder Masterbatches in der Normbrennkammer bestimmt. Als Normbrennkammer diente ein verschließbares Gefäß aus Stahl mit einem Volumen von 100 cm³. In die Normbrennkammer wurden 10 g Treibstoff eingefüllt und die Normbrennkammer verschlossen. Der Treibstoff wurde bei Raumtemperatur mittels eines pyrotechnischen Anzünders angezündet. Der Druckanstieg während des Treibstoffabbrandes wurde mittels eines Piezosensors mit einer Abtastrate von 20 kHz ermittelt. Aus dieser Messung ergibt sich eine Druck/Zeit-Kurve, die zur Bestimmung der relativen Quickness ausgewertet wird.

Dazu wird die erste Ableitung dp/dt der Druck/Zeit-Kurve gebildet und die Funktionswerte an den Stützstellen bei 0,2, 0,3, 0,4, 0,5, 0,6, 0,7 und 0,8 p/pₘₐₓ der ersten Ableitung ermittelt. Der Mittelwert aus den an den Stützstellen ermittelten Funktionswerten entspricht der relativen Quickness RQ. Die relative Quickness RQ ist ein Maß für die Druckänderung pro Zeit [bar/ms] in der Normbrennkammer beim Abbrand des Treibstoffes.

Die folgende Tabelle 1 zeigt einen Vergleich der ballistischen Eigenschaften der hergestellten Masterbatches aus Testversuchen in der Normbrennkammer. Die Spalte "fq" gibt das Verhältnis von RQ₂ zu RQ₁ an, wobei RQ₁ die relative Quickness des jeweiligen Masterbatches mit den kleineren Treibstoff-Formkörpern (1) und RQ₂ die relative Quickness des Masterbatches mit den im Vergleich zum ersten Masterbatch größeren Treibstoff-Formkörpern (2) bezeichnet. In der Spalte "ft" ist das entsprechende Verhältnis für die Zeit bis zum Erreichen des maximalen Drucks der Normbrennkammer tpBKₘₐₓ(2) zu tpBKₘₐₓ(1) angegeben.

**Tabelle 1: Vergleich der Masterbatches verschiedener Geometrie in der Normbrennkammer**

| **Masterbach-Geometrie** | | **Faktoren** | |
|---|---|---|---|
| **Klein (1)** | **Groß (2)** | **fq** = **RQ₂/RQ₁** | **ft = tBKₘₐₓ(2)** / **tBKₘₐₓ(1)** |
| 6x1.4 | 6x2.4 | 0.71 | 1.35 |
| 6x1.4 | 6x3.0 | 0.6 | 1.64 |
| 4x1.3 | 6x3.0 | 0.49 | 1.88 |

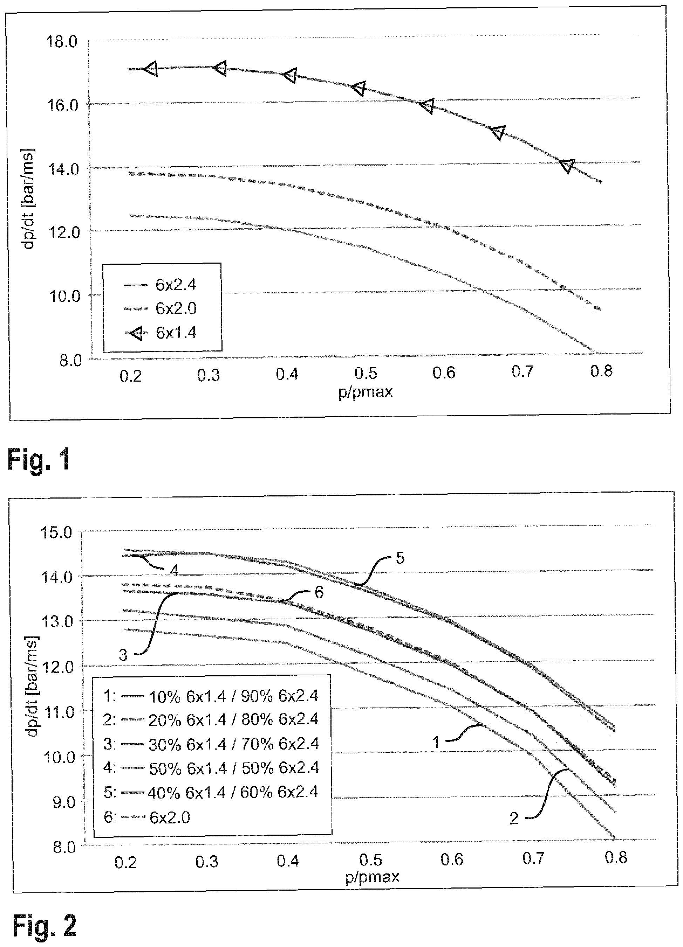

Figur 1 ist eine Darstellung der ersten Ableitung der Druck/Zeit-Kurve aus dem Testversuch in der Normbrennkammer für den ersten, zweiten und dritten Masterbatch. Aus diesen Kurven kann die relative Quickness der Masterbatches, wie oben beschrieben, ermittelt werden.

Die Ergebnisse der ballistischen Tests in der Normbrennkammer korrelieren mit den Ergebnissen aus dem Kannenversuch. Die Tabelle 2 zeigt beispielhaft einen Vergleich von zwei Masterbatches mit Treibstofftabletten von 6x1.4 mm und 6x2.4 mm hinsichtlich der Zeit bis zum Erreichen des maximalen Kannendrucks tpKₘₐₓ; bzw. das Verhältnis dieser jeweiligen Zeiten.

**Tabelle 2: Vergleich von Masterbatches verschiedener Geometrie im Kannenversuch**

| **Masterbatch-Geometrie** | | **Faktor** |
|---|---|---|
| **Klein (1)** | **Groß (2)** | **tKₘₐₓ(2)/tKₘₐₓ(1)** |
| 6x1.4 | 6x2.4 | 1.79 |

In der folgenden Tabelle 3 sind die aus dem Kannenversuch und die Prüfung in der Normbrennkammer erhaltenen ballistischen Parameter für den ersten, zweiten und dritten Masterbatch angegeben. Darüber hinaus sind zusätzlich die ballistischen Parameter von Treibsätzen angegeben, die aus Mischungen des ersten und des dritten Masterbatches erhalten wurden. Zur Durchführung des Kannenversuchs wurde ein üblicher Gasgenerator mit 72 g Treibstoff beladen und in einer geschlossenen Testkanne (60 I/10 bar) bei Raumtemperatur aktiviert. Die Prüfung in der Normbrennkammer erfolgte wie oben im Zusammenhang mit der Ermittlung der relativen Quickness beschrieben. In der Tabelle bezeichnet pKₘₐₓ den maximalen Kannendruck, tpKₘₐₓ die Zeit bis zum Erreichen des maximalen Kannendrucks, und RQ die Druckänderung pro Zeit in [bar/ms] in der Normbrennkammer.

**Tabelle 3: Ballistische Eigenschaften von Masterbatches und Treibsätzen aus Mischungen von Masterbatches**

| Treibsätze | | Ballistische Parameter | | | |
|---|---|---|---|---|---|
| Masterbatches [mm] | | pKₘₐₓ [bar] | tpKₘₐₓ [ms] | pBKₘₐₓ [bar] | tpBKₘₐₓ [ms] |
| 6x1.4 | | 3.9 | 54.2 | 212 | 5.7 |
| 6x2.0 | | 3.6 | 81.3 | 177 | 3.1 |
| 6x2.4 | | 3.5 | 97.1 | 161 | 3.2 |
| | | | | | |

| Mischungsverhältnis | | pKₘₐₓ [bar] | tpKₘₐₓ [ms] | pBKₘₐₓ [bar] | tpBKₘₐₓ [ms] |
|---|---|---|---|---|---|
| 6x1.4 [%] | 6x2.4 [%] | | | | |
| 50 | 50 | 3.6 | 64.4 | 190 | 3.8 |
| 40 | 60 | 3.5 | 70.1 | 178 | 4.2 |
| 30 | 70 | 3.5 | 81.2 | 172 | 3.1 |
| 20 | 80 | 3.4 | 88.4 | 174 | 3.7 |
| 10 | 90 | 3.4 | 95.0 | 174 | 3.3 |

Aus der Tabelle ist ersichtlich, dass die ballistischen Eigenschaften des zweiten Masterbatches, also des Referenzloses, mit Treibstofftabletten von 6x2.0 mm durch eine 30/70-Mischung des ersten und dritten Masterbatches mit Treibstofftabletten von 6x1.4 mm und 6x2.4 mm nachgestellt werden kann. Dabei liegt der Anteil der kleineren Treibstofftabletten des ersten Masterbatches im durch Mischen der Masterbatches hergestellten Treibsatz unterhalb des aus der Tablettenhöhe zu erwartenden Anteils. Es werden also im Verhältnis mehr Treibstofftabletten des dritten Masterbatches mit größeren Abmessungen benötigt, um das ballistische Ziel zu erreichen.

Figur 2 zeigt ein Diagramm mit einer Darstellung der ersten Ableitung der durch Prüfung in der Normbrennkammer erhaltenen Druck/Zeit-Kurven für den zweiten Masterbatch im Vergleich zu einer Mischungen aus dem ersten und dritten Masterbatch in verschiedenen Anteilen von 50/50, 40/60, 30/70, 20/80 und 90/10. Die Darstellung zeigt ebenfalls, dass das ballistische Profil des zweiten Masterbatches durch eine 30/70-Mischung des ersten und dritten Masterbatches nachgestellt werden kann. Soweit nichts anderes angegeben ist, beziehen sich die angegebenen Anteile auf Gewichtsprozent. Gleichzeitig zeigt der Versuch, dass das ballistische Profil einer Mischung von Treibstoff-Formkörpern stärker durch die Formkörper mit kleineren Abmessungen beeinflusst wird. Dies bedeutet, dass in dem durch Mischen der Masterbatches hergestellten Treibsatz zur Erreichung des ballistischen Ziels, hier des Masterbatches mit Treibstofftabletten von 6x2.0 mm, ein höherer Anteil an größeren Formkörpern erforderlich ist, als sich aus einer Berechnung nur aufgrund der Unterschiede der Tablettenhöhe ergeben würde.

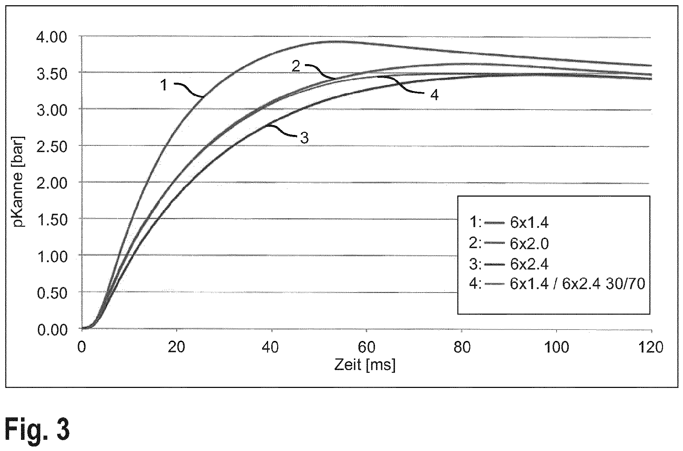

Figur 3 zeigt die im Kannenversuch ermittelte Druck/Zeit-Kurve des ersten, zweiten und dritten Masterbatches sowie einer 30/70-Mischung des ersten und dritten Masterbatches. Erneut zeigt sich, dass mit der 30/70-Mischung des ersten und dritten Masterbatches das ballistische Profil des zweiten Masterbatches, also des Referenzloses, nachgestellt werden kann. Angegeben ist jeweils das Mittel aus 5 Versuchen.

## Patentansprüche

1. Gasgenerator mit einem pyrotechnischen Treibsatz, wobei der Treibsatz aus einem ersten und wenigstens einem zweiten Masterbatch gebildet ist, die gemischt in einer Schüttung vorliegen, wobei jeder Masterbatch eine Vielzahl von Treibstoff-Formkörpern mit definierter Geometrie und einer relativen Quickness aufweist, wobei die relative Quickness RQ₂ des zweiten Masterbatches kleiner ist als die relative Quickness RQ₁ des ersten Masterbatches, wobei RQ₂ = RQ₁ · fq ist und fq ≤ 0,9 ist,
wobei die Treibstoff-Formkörper in dem ersten und zweiten Masterbatch sowie wahlweise in jedem weiteren Masterbatch die gleiche Zusammensetzung hinsichtlich der Treibstoff-Komponenten aufweisen, und wobei die Geometrie der Treibstoff-Formkörper innerhalb eines einzelnen Masterbatches gleich ist, aber verschieden von der Geometrie der Treibstoff-Formkörper in den jeweils anderen Masterbatches.
wobei die jeweilige relative Quickness RQ durch Prüfung einer Probe von 10 g des jeweiligen Treibsatzes oder Masterbatches in einer Normbrennkammer bestimmt wird,
wobei die Normbrennkammer ein verschließbares Gefäß aus Stahl mit einem Volumen von 100 cm³ ist,
wobei zur Prüfung die Probe bei Raumtemperatur innerhalb der Normbrennkammer mittels eines pyrotechnischen Anzünders angezündet wird und der Druckanstieg während des Treibstoffabbrands mittels eines Piezosensors mit einer Abtastrate von 20 kHz ermittelt wird, sodass sich eine Druck/Zeit-Kurve ergibt, die zur Bestimmung der relativen Quickness RQ ausgewertet wird, und
wobei die Auswertung mittels der ersten Ableitung dp/dt der Druck-Zeit-Kurve erfolgt und die Funktionswerte an den Stützstellen bei 0,2, 0,3, 0,4, 0,5, 0,6, 0,7 und 0,8 p/pₘₐₓ der ersten Ableitung ermittelt werden, und der Mittelwert aus den an den Stützstellen ermittelten Funktionswerten der jeweiligen relativen Quickness RQ entspricht.

2. Gasgenerator nach Anspruch 1, **dadurch gekennzeichnet, dass** die Treibstoff-Formkörper in Form von Treibstofftabletten vorliegen.

3. Gasgenerator nach Anspruch 2, **dadurch gekennzeichnet, dass** die Treibstofftabletten im ersten und zweiten sowie wahlweise jedem weiteren Masterbatch den gleichen Durchmesser aber eine unterschiedliche Höhe aufweisen.

4. Gasgenerator nach Anspruch 3, **dadurch gekennzeichnet, dass** der Durchmesser in einem Bereich von 2 mm bis 10 mm liegt, vorzugsweise von 2 mm bis 8 mm, weiterhin vorzugsweise von 3 mm bis 8 mm, weiterhin vorzugsweise von 3 mm bis 6 mm und besonders bevorzugt von 4 bis 8 mm.

5. Gasgenerator nach einem der Ansprüche 1 bis 3, **dadurch gekennzeichnet, dass** fq in einem Bereich von 0,4 bis 0,9 liegt, vorzugsweise von 0,4 bis 0,8.

6. Gasgenerator nach einem der Ansprüche 1 bis 5, **dadurch gekennzeichnet, dass** der Treibsatz aus mehr als zwei Masterbatches gebildet ist, wobei RQₓ die relative Quickness eines einzelnen Masterbatches bezeichnet und größer ist als die relative Quickness RQₓ₊₁ des nächsten Masterbatches, wobei RQₓ ≥ RQₓ₊₁ · 0,9 ist.

7. Gasgenerator nach Anspruch 6, **dadurch gekennzeichnet, dass** der Treibsatz aus drei Masterbatches gebildet ist, wobei RQ₁ die relative Quickness des ersten Masterbatches, RQ₂ die relative Quickness des zweiten Masterbatches und RQ₃ die relative Quickness des dritten Masterbatches bezeichnet, wobei RQ₁ > RQ₂ > RQ₃ und RQ₁ ≥ RQ₂ · 0,9 sowie RQ₂ ≥ RQ₃ · 0,9 ist.

8. Gasgenerator nach einem der Ansprüche 1 bis 7, **dadurch gekennzeichnet, dass** der erste Masterbatch eine in einem Kannenversuch gemessene Zeit bis zum Erreichen des maximalen Kannendrucks tpKₘₐₓ(1) und der zweite Masterbatch eine unter gleichen Versuchsbedingungen im Kannenversuch gemessene Zeit bis zum Erreichen des maximalen Kannendrucks tpKₘₐₓ(2) aufweist, wobei tpKₘₐₓ(1) · ft = tpKₘₐₓ(2) ist, wobei ft in einem Bereich von 1,5 bis 3,2 liegt, vorzugsweise in einem Bereich von 1,5 bis 2,8 und besonders bevorzugt in einem Bereich von 1,6 bis 2,0.

9. Verfahren zur Herstellung eines pyrotechnischen Treibsatzes zur Verwendung in einem Gasgenerator, welches die folgenden Schritte umfasst:
Bereitstellen eines ersten Masterbatches aus einer Vielzahl von Treibstoff-Formkörpern mit vordefinierter Geometrie und einer ersten relativen Quickness RQ₁;
Bereitstellen eines zweiten Masterbatches aus einer Vielzahl von Treibstoff-Formkörpern mit vordefinierter Geometrie und einer zweiten relativen Quickness RQ₂, wobei die relative Quickness RQ₂ des zweiten Masterbatches kleiner ist als die relative Quickness RQ₁ des ersten Masterbatches, wobei RQ₂ = RQ₁ · fq und fq ≤ 0,9 ist; und
Mischen einer vorbestimmten Menge des ersten Masterbatches mit einer vorbestimmten Menge des zweiten Masterbatches unter Bildung des pyrotechnischen Treibsatzes in Form einer Schüttung, in der die Treibstoff-Formkörper gemischt vorliegen,
wobei die Treibstoff-Formkörper in dem ersten und zweiten Masterbatch sowie wahlweise in jedem weiteren Masterbatch die gleiche Zusammensetzung hinsichtlich der Treibstoff-Komponenten aufweisen, und wobei die Geometrie der Treibstoff-Formkörper innerhalb eines einzelnen Masterbatches gleich ist, aber verschieden von der Geometrie der Treibstoff-Formkörper in den jeweils anderen Masterbatches,
wobei die jeweilige relative Quickness RQ durch Prüfung einer Probe von 10 g des jeweiligen Treibsatzes oder Masterbatches in einer Normbrennkammer bestimmt wird,
wobei die Normbrennkammer ein verschließbares Gefäß aus Stahl mit einem Volumen von 100 cm³ ist,
wobei zur Prüfung die Probe bei Raumtemperatur innerhalb der Normbrennkammer mittels eines pyrotechnischen Anzünders angezündet wird und der Druckanstieg während des Treibstoffabbrands mittels eines Piezosensors mit einer Abtastrate von 20 kHz ermittelt wird, sodass sich eine Druck/Zeit-Kurve ergibt, die zur Bestimmung der relativen Quickness RQ ausgewertet wird, und
wobei die Auswertung mittels der ersten Ableitung dp/dt der Druck-Zeit-Kurve erfolgt und die Funktionswerte an den Stützstellen bei 0,2, 0,3, 0,4, 0,5, 0,6, 0,7 und 0,8 p/pₘₐₓ der ersten Ableitung ermittelt werden, und der Mittelwert aus den an den Stützstellen ermittelten Funktionswerten der jeweiligen relativen Quickness RQ entspricht.

10. Verfahren nach Anspruch 9, **dadurch gekennzeichnet, dass** die Treibstoff-Formkörper in der Schüttung homogen gemischt vorliegen.

11. Verfahren nach einem der Ansprüche 9 oder 10, **dadurch gekennzeichnet, dass** wenigstens ein weiterer Masterbatch aus einem pyrotechnischen Treibstoff mit einer Vielzahl von Treibstoffformkörpern mit vordefinierter Geometrie einer relativen Quickness RQ₃ bereitgestellt wird, wobei die Geometrie der Treibstoff-Formkörper im weiteren Masterbatch verschieden von der Geometrie der Treibstoff-Formkörper im ersten und zweiten Masterbatch ist, und wobei die relative Quickness RQ₃ des weiteren Masterbatches kleiner ist als die relative Quickness RQ₂ des zweiten Masterbatches, wobei RQ₃ = RQ₂ · fq und fq ≤ 0,9 ist, vorzugsweise fq = 0,4 bis 0,9 ist.

12. Verfahren nach einem der Ansprüche 9 bis 11, **dadurch gekennzeichnet, dass** eine ballistische Eigenschaft des pyrotechnischen Treibsatzes festgelegt wird und die vorbestimmte Menge des ersten Masterbatches und des zweiten Masterbatches so eingestellt wird, dass die Schüttung der Treibstoff-Formkörper die ballistische Eigenschaft aufweist.

13. Verfahren nach Anspruch 12, **dadurch gekennzeichnet, dass** die ballistische Eigenschaft aus der Gruppe ausgewählt ist, die aus der relativen Quickness RQ, dem maximale Kammerdruck in einer Normbrennkammer pBKₘₐₓ, dem maximalen Kannendruck im Kannenversuch pKₘₐₓ, der Zeit bis zum Erreichen des maximalen Kammerdrucks in der Normbrennkammer tpBKₘₐₓ, der Zeit bis zum Erreichen des maximalen Kannendrucks im Kannenversuch tpKₘₐₓ, dem maximalen Brennkammerdruck eines Gasgenerators pBKGGₘₐₓ, der Zeit bis zum Erreichen des maximalen Brennkammerdrucks in dem Gasgenerator tpBKGGₘₐₓ, der Abbrandgeschwindigkeit und/oder der Abbranddauer besteht.

14. Verfahren nach einem der Ansprüche 9 bis 13, **dadurch gekennzeichnet, dass** das Mischen der Masterbatches unmittelbar an einer Fertigungslinie des Gasgenerators erfolgt.

## Claims

1. A gas generator comprising a pyrotechnical propelling charge, wherein the charge is formed from a first and at least a second master batch which are in a mixed state in a filling, each master batch having a plurality of molded propellant bodies having defined geometry and having a relative quickness, wherein the relative quickness RQ₂ of the second master batch is less than the relative quickness RQ₁ of the first master batch, wherein RQ₂ = RQ₁ · fq and fq ≤ 0.9,
wherein the molded propellant bodies in the first and second master batches as well as optionally in each further master batch have the same composition regarding the propellant components and wherein the geometry of the molded propellant bodies within one single master batch is equal but is different from the geometry of the molded propellant bodies within the respective other master batches,
wherein the respective relative quickness RQ is determined by testing a sample of 10 g of the respective propelling charge or master batch in a standard combustion chamber,
wherein the standard combustion chamber is a closable vessel made from steel having a volume of 100 cm³,
wherein the sample is ignited at room temperature within the standard combustion chamber by means of a pyrotechnical igniter and the increase in pressure during the propellant burn-off is detected by means of a piezo sensor having a scanning rate of 20 kHz so that it results in a pressure/time curve which is evaluated to determine the relative quickness RQ, and
wherein the evaluation is based on the first derivation dp/dt of the pressure/time curve and the function values are established at the supporting points at 0.2, 0.3, 0.4, 0.5, 0.6, 0.7 and 0.8 p/pₘₐₓ of the first derivation and the mean value of the function values established at the supporting points corresponds to the respective relative quickness RQ.

2. The gas generator according to claim 1, **characterized in that** the molded propellant bodies are present in the form of propellant pellets.

3. The gas generator according to claim 2, **characterized in that** the propellant pellets in the first and second as well as optionally any further master batches have the same diameter but different height.

4. The gas generator according to claim 3, **characterized in that** the diameter is within a range of from 2 mm to 10 mm, preferably of from 2 mm to 8 mm, further preferred of from 3 mm to 8 mm, further preferred of from 3 mm to 6 mm and especially preferred of from 4 to 8 mm.

5. The gas generator according to any one of the claims 1 to 3, **characterized in that** fq is within a range of from 0.4 to 0.9, preferably of from 0.4 to 0.8.

6. The gas generator according to any one of the claims 1 to 5, **characterized in that** the propelling charge is formed from more than two master batches, with RQₓ denoting the relative quickness of one single master batch and being larger than the relative quickness RQₓ₊₁ of the next master batch, wherein RQₓ ≥ RQₓ₊₁ · 0.9.

7. The gas generator according to claim 6, **characterized in that** the propelling charge is formed from three master batches, with RQ₁ denoting the relative quickness of the first master batch, RQ₂ denoting the relative quickness of the second master batch and RQ₃ denoting the relative quickness of the third master batch, wherein RQ₁ > RQ₂ > RQ₃ and RQ₁ ≥ RQ₂ · 0.9 as well as RQ₂ ≥ RQ₃ · 0.9.

8. The gas generator according to any one of the claims 1 to 7, **characterized in that** the first master batch shows a time until reaching the maximum can pressure tpKₘₐₓ(1) measured in a can test and the second master batch shows a time until reaching the maximum can pressure tpKₘₐₓ(2) measured in equal test conditions in the can test, wherein tpKₘₐₓ(1) · ft = tpKₘₐₓ(2), wherein ft is within a range of from 1.5 to 3.2, preferably within a range of from 1.5 to 2.8 and especially preferred within a range of from 1.6 to 2.0.

9. A method for producing a pyrotechnical propelling charge for use in a gas generator comprising the following steps of:
providing a first master batch consisting of a plurality of molded propellant bodies having predefined geometry and a first relative quickness RQ₁;
providing a second master batch consisting of a plurality of molded propellant bodies having predefined geometry and a second relative quickness RQ₂, the relative quickness RQ₂ of the second master batch being less than the relative quickness RQ₁ of the first master batch, wherein RQ₂ = RQ₁ · fq and fq ≤ 0.9; and
mixing a predetermined amount of the first master batch with a predetermined amount of the second master batch while forming the pyrotechnical propelling charge in the form of a filling in which the molded propellant bodies are present in a mixed state,
wherein the molded propellant bodies in the first and second master batches as well as optionally in each further master batch have the same composition regarding the propellant components and wherein the geometry of the molded propellant bodies within one single master batch is equal but is different from the geometry of the molded propellant bodies within the respective other master batches,
wherein the respective relative quickness RQ is determined by testing a sample of 10 g of the respective propelling charge or master batch in a standard combustion chamber,
wherein the standard combustion chamber is a closable vessel made from steel having a volume of 100 cm³,
wherein the sample is ignited at room temperature within the standard combustion chamber by means of a pyrotechnical igniter and the increase in pressure during the propellant burn-off is detected by means of a piezo sensor having a scanning rate of 20 kHz so that it results in a pressure/time curve which is evaluated to determine the relative quickness RQ, and
wherein the evaluation is based on the first derivation dp/dt of the pressure/time curve and the function values are established at the supporting points at 0.2, 0.3, 0.4, 0.5, 0.6, 0.7 and 0.8 p/pₘₐₓ of the first derivation and the mean value of the function values established at the supporting points corresponds to the respective relative quickness RQ.

10. The method according to claim 9, **characterized in that** the molded propellant bodies are in a homogeneously mixed state in the filling.

11. The method according to any one of the claims 9 or 10, **characterized in that** at least one further master batch consisting of pyrotechnical propellant comprising a plurality of molded propellant bodies having predefined geometry and a relative quickness RQ₃ is provided, the geometry of the molded propellant bodies in the further master batch being different from the geometry of the molded propellant bodies in the first and second master batches and the relative quickness RQ₃ of the further master batch being less than the relative quickness RQ₂ of the second master batch, wherein RQ₃ = RQ₂ · fq and fq ≤ 0.9, preferably fq = 0.4 to 0.9.

12. The method according to any one of the claims 9 to 11, **characterized in that** a ballistic property of the pyrotechnical propelling charge is defined and the predetermined amount of the first master batch and of the second master batch is set so that the filling of the molded propellant bodies exhibits the ballistic property.

13. The method according to claim 12, **characterized in that** the ballistic property is selected from the group consisting of the relative quickness RQ, the maximum chamber pressure in a standard combustion chamber pBKₘₐₓ, the maximum can pressure in a can test pKₘₐₓ, the time until reaching the maximum chamber pressure in the standard combustion chamber tpBKₘₐₓ, the time until reaching the maximum can pressure in the can test tpKₘₐₓ, the maximum combustion chamber pressure of a gas generator pBKGGₘₐₓ, the time until reaching the maximum combustion chamber pressure in the gas generator tpBKGGₘₐₓ, the burn-off rate and/or the burn-off duration.

14. The method according to any one of the claims 9 to 13, **characterized in that** mixing the master batches is carried out directly at a production line of the gas generator.

## Revendications

1. Générateur de gaz avec une charge propulsive pyrotechnique, pour lequel la charge propulsive est formée d'un premier et d'au moins un second lots maîtres, lesquels sont présents mélangés en vrac, pour lequel chaque lot maître comprend une pluralité d'objets de forme spécifique en propergol avec une géométrie définie et une vitesse relative, pour lequel la vitesse la relative RQ₂ du second lot maître est plus petite que la vitesse relative RQ₁ du premier lot maître, pour lequel RQ₂ = RQ₁ ·fq et avec fq ≤ 0,9.
pour lequel les objets de forme spécifique en propergol dans les premier et second lots maîtres et éventuellement dans chaque autre lot maître ont la même composition en ce qui concerne les composants du propergol, et pour lequel la géométrie des objets de forme spécifique en propergol dans un seul lot maître est identique mais différente de la géométrie des objets de forme spécifique en propergol dans les autres lots maîtres respectifs.
pour lequel la vitesse relative respective RQ est déterminée en testant un échantillon de 10 g du propergol ou du lot maître respectif dans une chambre de combustion standard,
pour lequel la chambre de combustion standard est un récipient fermable en acier ayant un volume de 100 cm3,
pour lequel, pour le teste, l'échantillon est allumé à température ambiante dans la chambre de combustion standard au moyen d'un allumeur pyrotechnique et l'augmentation de la pression pendant la combustion du propergol est mesurée au moyen d'un capteur piézoélectrique avec une fréquence d'échantillonnage de 20 kHz, de sorte qu'il en résulte une courbe pression/temps qui est évaluée pour déterminer la vitesse relative RQ, et
pour lequel l'évaluation est effectuée au moyen de la première dérivée dp/dt de la courbe pression/temps et les valeurs de fonction sont déterminées aux points d'appui à 0,2, 0,3, 0,4, 0,5, 0,6, 0,7 et 0,8 p/pmax de la première dérivée, et la valeur moyenne des valeurs de fonction déterminées aux points d'appui correspond à la vitesse relative respective RQ.

2. Générateur de gaz selon la revendication 1, **caractérisé en ce que** les objets de forme spécifique en propergol se présentent sous la forme de pastilles de propergol.

3. Générateur de gaz selon la revendication 2, **caractérisé en ce que** les pastilles de propergol dans le premier et le second lot maitre et éventuellement dans chaque autre lot maître ont le même diamètre mais une hauteur différente.

4. Générateur de gaz selon la revendication 3, **caractérisé en ce que** le diamètre est dans une gamme de 2 mm à 10 mm, de préférence de 2 mm à 8 mm, pour aller plus loin de préférence de 3 mm à 8 mm, encore plus loin de préférence de 3 mm à 6 mm et particulièrement de 4 à 8 mm.

5. Générateur de gaz selon l'une quelconque des revendications 1 à 3, **caractérisé en ce que** fq est compris dans un intervalle de 0,4 à 0,9, de préférence de 0,4 à 0,8.

6. Générateur de gaz selon l'une quelconque des revendications 1 à 5, **caractérisé en ce que** la charge propulsive est formée de plus de deux lots maîtres, pour lequel RQₓ désigne la vitesse relative d'un seul lot maître et est supérieure à la vitesse relative RQₓ₊₁ du lot maître suivant, pour lequel RQₓ ≥ RQₓ₊₁ · 0,9.

7. Générateur de gaz selon la revendication 6, **caractérisé en ce que** la charge propulsive est formée de trois lots maîtres, où RQ₁ désigne la vitesse relative du premier lot maître, RQ₂ désigne la vitesse relative du deuxième lot maître et RQ₃ désigne la vitesse relative du troisième lot maître, pour lequel RQ₁ > RQ₂ > RQ₃ et RQ₁ ≥ RQ₂ · 0,9 et RQ₂ ≥ RQ₃ · 0,9.

8. Générateur de gaz selon l'une quelconque des revendications 1 à 7, **caractérisé en ce que** le premier lot maître a un temps pour atteindre la pression maximale en tank tpKₘₐₓ(1) mesurée dans un test de tank et le second lot maître a un temps pour atteindre la pression maximale en tank tpKₘₐₓ(2) mesurée dans les mêmes conditions de test dans un test en tank, pour lequel tpKₘₐₓ(1) · ft = tpKₘₐₓ(2), où ft est dans une gamme de 1,5 à 3,2, de préférence dans une gamme de 1,5 à 2,8 et particulièrement de préférence dans une gamme de 1,6 à 2,0.

9. Procédé de fabrication d'un charge propulsive pyrotechnique destinée à être utilisée dans un générateur de gaz, comprenant les étapes consistant à:
Fournir un premier lot maître d'une pluralité d'objets de forme spécifique en propergol ayant une géométrie prédéfinie et une première vitesse relative RQ₁;
Fournir un deuxième lot maître à partir d'une pluralité d'objets de forme spécifique en propergol ayant une géométrie prédéfinie et une deuxième vitesse relative RQ₂, pour lequel la vitesse relative RQ₂ du deuxième lot maître est inférieure à la vitesse relative RQ₁ du premier lot maître, pour lequel RQ2 = RQ1 . fq et fq ≤ 0,9; et
Mélanger une quantité prédéterminée du premier lot maître avec une quantité prédéterminée du second lot maître pour former la charge propulsive pyrotechnique sous la forme d'un vrac dans lequel les objets de forme spécifique en propergol sont mélangés,
pour lequel les objets de forme spécifique en propergol dans les premier et second lots maîtres et éventuellement dans chaque autre mélange maître ont la même composition en ce qui concerne les composants du propergol, et pour lequel la géométrie des objets de forme spécifique en propergol dans un seul lot maître est la même mais différente de la géométrie des objets de forme spécifique en propergol dans les autres lots maîtres respectifs,
pour lequel la vitesse relative respective RQ est déterminée en testant un échantillon de 10 g du propergol ou du lot maître respectif dans une chambre de combustion standard,
pour lequel la chambre de combustion standard est un récipient scellable en acier ayant un volume de 100 cm3,
pour lequel, pour le test, l'échantillon est allumé à température ambiante dans la chambre de combustion standard au moyen d'un allumeur pyrotechnique et l'augmentation de la pression pendant la combustion du propergol est mesurée au moyen d'un capteur piézoélectrique avec une fréquence d'échantillonnage de 20 kHz, de sorte qu'il en résulte une courbe pression/temps qui est évaluée pour déterminer la vitesse relative RQ, et
pour lequel l'évaluation est effectuée au moyen de la première dérivée dp/dt de la courbe pression/temps et les valeurs de fonction sont déterminées aux points d'appui à 0,2, 0,3, 0,4, 0,5, 0,6, 0,7 et 0,8 p/pmax de la première dérivée, et la valeur moyenne des valeurs de fonction déterminées aux points d'appui correspond à la vitesse relative respective RQ.

10. Procédé selon la revendication 9, **caractérisé en ce que** les objets de forme spécifique en propergol sont mélangés de manière homogène dans le vrac.

11. Procédé selon l'une quelconque des revendications 9 ou 10, **caractérisé en ce qu'**il est prévu au moins un autre lot maître d'un propergol pyrotechnique comprenant une pluralité d'objets de forme spécifique en propergol ayant une géométrie prédéfinie d'une vitesse relative RQ₃, pour lequel la géométrie des objets de forme spécifique en propergol dans l'autre lot maître est différente de la géométrie des objets de forme spécifique en propergol dans le premier et le deuxième lot maître, et pour lequel la vitesse relative RQ₃ de l'autre lot maître est inférieure à la vitesse relative RQ₂ du deuxième lot maître, pour lequel RQ₃ = RQ₂ · fq et fq ≤ 0,9, de préférence fq = 0,4 à 0,9.

12. Procédé selon l'une quelconque des revendications 9 à 11, **caractérisé en ce que** sera déterminée une propriété balistique de la charge propulsive pyrotechnique et sera ajustée la quantité prédéterminée du premier lot maître et du deuxième lot maître pour que le vrac des objets de forme spécifique en propergol présente la propriété balistique.

13. Procédé selon la revendication 12, **caractérisé en ce que** la propriété balistique est choisie dans le groupe, constitué par la vitesse relative RQ, la pression maximale de la chambre dans une chambre de combustion standard pBKₘₐₓ, la pression maximale en tank lors d'un essai en tank pKₘₐₓ, le temps pour atteindre la pression maximale de la chambre dans la chambre de combustion standard tpBKₘₐₓ, le temps jusqu'à ce que la pression maximale possible lors d'un essai en tank tpKₘₐₓ soit atteinte, la pression maximale de la chambre de combustion d'un générateur de gaz pBKGGₘₐₓ, le temps jusqu'à ce que la pression maximale de la chambre de combustion dans le générateur de gaz tpBKGGₘₐₓ soit atteinte, la vitesse de combustion et/ou la durée de combustion.

14. Procédé selon l'une quelconque des revendications 9 à 13, **caractérisé en ce que** le mélange des lots maîtres a lieu directement sur une ligne de production du générateur de gaz.
